(19) Europäisches Patentamt
European Patent Office
Office européen des brevets

(11) **EP 4 367 508 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **22744676.2**

(22) Anmeldetag: **04.07.2022**

(51) Internationale Patentklassifikation (IPC):
**G01N 23/227** (2018.01) **B82Y 10/00** (2011.01)
**G06N 10/00** (2022.01)

(52) Gemeinsame Patentklassifikation (CPC):
**G01N 23/227; B82Y 35/00; G06N 10/40**

(86) Internationale Anmeldenummer:
**PCT/EP2022/068408**

(87) Internationale Veröffentlichungsnummer:
**WO 2023/280758 (12.01.2023 Gazette 2023/02)**

(54) **VERFAHREN UND VORRICHTUNG ZUR ORTSAUFGELÖSTEN LOKALISIERUNG VON DEFEKTEN IN MATERIALIEN**

PROCESS AND DEVICE FOR THE SPATIALLY RESOLVED LOCALIZATION OF DEFECTS IN MATERIALS

PROCESSUS ET DISPOSITIF DE LOCALISATION À RÉSOLUTION SPATIALE DE DÉFAUTS DANS DES MATÉRIAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2021 DE 102021117409**

(43) Veröffentlichungstag der Anmeldung:
**15.05.2024 Patentblatt 2024/20**

(73) Patentinhaber: **Arumugam, Sri Ranjini**
**04229 Leipzig (DE)**

(72) Erfinder: **Arumugam, Sri Ranjini**
**04229 Leipzig (DE)**

(74) Vertreter: **Hecht, Jan-David**
**Patentanwaltskanzlei Dr. Hecht**
**Ranstädter Steinweg 28**
**04109 Leipzig (DE)**

(56) Entgegenhaltungen:
**WO-A1-2021/051163      WO-A1-2021/092661
DE-A1- 102016 103 157      US-A1- 2012 293 791**

• **KEIKI FUKUMOTO ET AL: "Femtosecond time-resolved photoemission electron microscopy for spatiotemporal imaging of photogenerated carrier dynamics in semiconductors", REVIEW OF SCIENTIFIC INSTRUMENTS, vol. 85, no. 8, 1 August 2014 (2014-08-01), 2 Huntington Quadrangle, Melville, NY 11747, pages 083705, XP055605795, ISSN: 0034-6748, DOI: 10.1063/1.4893484**

**Beschreibung**

Die vorliegende Erfindung betrifft ein Verfahren zur ortsaufgelösten Lokalisierung eines Defekts in einem Material, das eine Bandlücke aufweist, nach dem Oberbegriff von Anspruch 1 und eine Vorrichtung zur ortsaufgelösten Lokalisierung eines Defekts in einem Material, das eine Bandlücke aufweist, nach dem Oberbegriff von Anspruch 14.

Unter einem Defekt in einem Material wird im Rahmen der vorliegenden Erfindung eine strukturelle oder chemische Veränderung verstanden, bei der ein oder mehrere Elektronen eingefangen und an der Stelle des Defekts lokalisiert werden. Bekannt sind solche Defekte vor allem aus Festkörpern. Es könnte sich aber auch um Flüssigkeiten oder Gase handeln. Dabei kann das Material auch ein oder mehrere Moleküle aufweisen.

Wenn das Material isolierend oder halbleitend ist oder eine Bandlücke aufweist, sind diese Defekte durch Elektronen charakterisiert, die ein Energieniveau haben, das im Grundzustand innerhalb der Bandlücke des Wirtsmaterials liegt (vgl. Bassett, L. C. et al. (2019) 'Quantum defects by design', Nanophotonics, 8(11), pp. 1867-1888. doi: 10.1515/nanoph-2019-0211). Diese Elektronen können in höhere Zustände angeregt werden und kehren dann durch strahlende oder nicht strahlende Prozesse in den Grundzustand zurück. Defekte, die Photonen absorbieren und anschließend Lumineszenzphotonen emittieren, werden Farbzentren genannt. Es gibt unzählige Farbzentren im Festkörper. Zum Beispiel sind für Diamant mehr als 500 Arten von Lumineszenzfarbzentren bekannt (vgl. Zaitsev, A. M. (2001) Optical Properties of Diamond. Berlin, Heidelberg: Springer Berlin Heidelberg. doi: 10.1007/978-3-662-04548-0). Aber auch andere Materialien wie Siliciumcarbid (vgl. Castelletto, S. et al. (2014) 'A silicon carbide room-temperature single-photon source', Nature Materials, 13(2), pp. 151-156. doi: 10.1038/nmat3806), Quarz und sogar zweidimensionale Materialien, wie hexagonales Bornitrid (vgl. Tran, T. T. et al. (2016) 'Quantum emission from hexagonal boron nitride monolayers', Nature Nanotechnology, 11(1), pp. 37-41. doi: 10.1038/nnano.2015.242), können Lumineszenzdefekte aufweisen.

Wie gesagt können die mit diesen Defekten verbundenen Elektronen ein bestimmtes Wellenlängenband absorbieren und ein entsprechendes langwelliges Photon mit einer charakteristischen Lebensdauer im angeregten Zustand emittieren. Die emittierten langwelligen Photonen werden in der Regel durch ein Mikroskopobjektiv mit hoher numerischer Apertur (NA) gesammelt und von einem einzelnen Photonenzähler oder einer Photovervielfacherröhre erfasst. Das Gerät, das diese Bildgebung durchführen kann, ist ein konfokales optisches Mikroskop. Eine solche optische Detektion hat jedoch eine Einschränkung der Auflösung, die durch die halbe Wellenlänge des zur Detektion verwendeten Lichts definiert ist:

$$\text{Optische Auflösung d} = (0.51 \cdot \lambda) / \text{NA}$$

Diese Auflösungsgrenze stellt ein Hauptproblem dar, wenn mehrere eng beieinander liegende Farbzentren (Defekte in Festkörpermaterialien) abgebildet werden sollen. Zwar gibt es einige Methoden, um diese beugungsbegrenzte Auflösung zu übertreffen, wie STED ("Stimulated Emission Depletion" - vgl. Hell, S. W. and Wichmann, J. (1994) 'Breaking the diffraction resolution limit by stimulated emission: stimulated-emission-depletion fluorescence microscopy', Optics Letters, 19(11), p. 780. doi: 10.1364/OL.19.000780) (vgl. Rittweger, E. et al. (2009) 'STED microscopy reveals crystal colour centres with nanometric resolution', Nature Photonics, 3(3), pp. 144-147. doi: 10.1038/nphoton.2009.2), mikrowellenunterstütztes STORM ("Stochastic Optical Reconstruction Microscopy" - vgl. Pfender, M. et al. (2014) 'Single-spin stochastic optical reconstruction microscopy', Proceedings of the National Academy of Sciences, 111(41), pp. 14669-14674. doi:10.1073/pnas.1404907111) und gradientencodierte Bildgebung (vgl. Arai, K. et al. (2015) 'Fourier magnetic imaging with nanoscale resolution and compressed sensing speed-up using electronic spins in diamond', Nature Nanotechnology, 10(10), pp. 859-864. doi: 10.1038/nnano.2015.171) (vgl. Zhang, H. et al. (2017) 'Selective addressing of solid-state spins at the nanoscale via magnetic resonance frequency encoding', npj Quantum Information, 3(1), p. 31. doi: 10.1038/s41534-017-0033-3) usw. Diese sind aber vergleichsweise langsam und erfordern ein pixelweises Scannen, das jegliche Möglichkeit zur Beobachtung einer großen Anzahl von Defekten verhindert.

In dem Dokument Keki Fukumoto et al. (014) 'Femtosecond time-resolved photoemission electron microscopy for spatiotemporal imaging of photogenerated carrier dynamics in semiconductors', Review of scientific instruments, Bd. 85, Nr. 8, Seite 083705. Doi: 10.1063/1.4893484 ist eine Vorrichtung beschrieben, die in der Lage ist, eine zeitaufgelöste Photoelektronenmikroskopie mit Hilfe eines Femtosekunden-Laserpulses durchzuführen, bei der eine räumliche Auflösung von 100 nm besteht.

Es ist daher Aufgabe der vorliegenden Erfindung, eine Methode bereitzustellen, mit der Defekte in Materialen, bevorzugt in Festkörpern, mit höherer örtlicher Auflösung lokalisiert werden können. Insbesondere soll eine Abbildung solcher Defekte mit hoher örtlicher Auflösung erfolgen, die insbesondere schnell und kostengünstig möglich ist.

Diese Aufgabe wird gelöst mit dem erfindungsgemäßen Verfahren nach Anspruch 1 und der erfindungsgemäßen Vorrichtung nach Anspruch 14. Vorteilhafte Weiterbildungen sind in den abhängigen Ansprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn die mit den Defekten verbundenen Elektronen mit einer solchen Energie angeregt werden, dass sie aus dem Material emittiert werden und anschließend eine Elektronenabbildung vorgenommen wird, um die räumliche Lage der aus der Oberfläche des Festkörpers austretenden Elektronen und damit der entsprechenden Defekte zu bestimmen.

Das erfindungsgemäße Verfahren zur ortsaufgelösten Lokalisierung eines Defekts in einem Material, wobei das Material eine Bandlücke aufweist, nach Anspruch 1, ist dadurch gekennzeichnet, dass das Elektron so angeregt wird, dass es aus dem Material emittiert wird und anschließend eine Elektronenabbildung durchgeführt wird.

Es wurde zwar auch schon das Verfahren der Photoemissions-Elektronenmikroskopie (PEEM) verwendet, bei der auch einen Abbildung emittierter Elektronen erfolgt, allerdings erreicht dieses Verfahren nicht die notwendige Ortsauflösung, um Defekte in Materialien (also eine strukturelle oder eine chemische Veränderung, bei der ein oder mehrere Elektronen eingefangen und an der Stelle des Defekts lokalisiert werden) ortsaufgelöst zu lokalisieren. Stattdessen wurde die PEEM bisher immer nur zur Charakterisierung des Volumenmaterials (wie Masse, Gitter und Ensemble des Materials) benutzt. Daher können mit PEEM höchstens Defektensemble untersucht werden, wobei entsprechend beispielsweise der Veröffentlichung K. Fukumoto et al.: Imaging the defect distribution in 2D hexagonal boron nitride by tracing photogenerated electron dynamics. J. Phys. D: Appl. Phys. 53 (2020) 405106 (9pp). DOI: 10.1088/1361-6463/ab9860 dabei höchstens Auflösungen von 100 nm erreicht werden, was für eine ortsaufgelöste Lokalisierung eines einzelnen Defekts oder gar Quantenanwendungen zu gering ist. Mit der Anwendung von beispielsweise Transmissionelektronenmikroskopie (TEM), insbesondere Kryo-TEM können dagegen Ortsauflösungen bis zu 0,1 nm erreicht werden.

In einer vorteilhaften Weiterbildung ist vorgesehen, dass zumindest eines der folgenden Elemente verwendet wird: Aberrationskorrekturelement, Mittel für hohe Vergrößerung, Objektiv mit hoher numerischer Apertur, Fokussierelement und Beschleunigungssäule zur Erhöhung der Energie der Elektronen, weil dadurch sehr hohe Auflösungen bei hoher Bildqualität und Bildrobustheit und automatischer Ausrichtung erreicht werden können.

Erfindungsgemäß ist vorgesehen, dass der Defekt mit einer Ortsauflösung von mindestens 25 nm, bevorzugt von mindestens 20 nm und insbesondere im Bereich 0,1 nm bis 20 nm abgebildet wird. Dadurch können Quantenanwendungen erfolge, weil dann quantenmechanische Wechselwirkungen von Spins aufgelöst werden können, die auftreten, wenn solche Spins sich im Bereich bis zu 25 nm beabstandet befinden.

Erfindungsgemäß ist vorgesehen, dass die Elektronenabbildung mit Hilfe einer Elektronenoptik und einem Elektronendetektor durchgeführt wird, weil dann der entsprechende Aufbau für die Optik und Detektion, also bis auf die Elektronenquelle von einem üblichen - beispielsweise einem kommerziell erhältlichen-Transmissionselektronenmikroskop verwendet werden kann. Bevorzugt wird als Elektronendetektor eine Mikrokanalplatte (microchannel plate, abgekürzt MCP - ein flächenhafter, bildauflösender Sekundärelektronenvervielfacher), ein direkter Elektronendetektor, ein Elektronen-Multiplikator-CCD (EMCCD), ein sCMOS (Scientific CMOS) oder ein Phosphorbildschirm verwendet, womit Aufnahmen mit hoher örtlicher Auflösung gelingen. Bevorzugt wird als Elektronenoptik ein magnetisches Element oder ein elektromagnetisches Element verwendet, weil dadurch eine besonders einfache Sammlung und Leitung der Elektronen bzw. Manipulation der Elektronen zur vergrößerten Abbildung erfolgen können.

In einer vorteilhaften Weiterbildung ist vorgesehen, dass die Anregung des Elektrons durch ein oder mehrere elektromagnetische Wellen, bevorzugt Licht (Infrarot (300 GHz bis 384 THz), sichtbares Licht (384 THz bis 789 THz), Ultraviolettes Licht (789 THz bis 30 PHz)), Rundfunkwellen (Ultrakurzwellen (30 MHz bis 300 MHz), Kurzwellen (3 MHz bis 30 MHz), Mittelwellen (300 kHz bis 3 MHz) und Langwellen (30 kHz bis 300 kHz)), Terahertzstrahlung (0,1 THz bis 10 THz), Niederfrequenz (1 kHz bis 30 kHz) oder Mikrowellen (1 GHz bis 300 GHz) erfolgt. Dadurch können die Elektronen besonders einfach emittiert werden und die Anregungsenergie kann für eine anschließende Auswertung definiert werden.

In einer vorteilhaften Weiterbildung ist vorgesehen, dass die Anregung auf einen Bereich, bevorzugt einen Oberflächenbereich des Materials fokussiert wird, wobei insbesondere Licht verwendet wird, das durch ein oder mehrere optische Elemente, vorzugsweise ein Objektiv mit hoher numerischer Apertur fokussiert wird, oder dass die Anregung mit einer LASER-Lichtquelle erfolgt oder dass die Anregung in Evaneszenz-Wellen Geometrie erfolgt oder dass der Defekt in einer Licht begrenzenden Nanostruktur, Kavität oder optischen Resonator angeordnet wird. Bei einer Anregung in Evaneszenz-Wellen Geometrie kann die Anregung auf eine Tiefe von wenigen Nanometer unter der Oberfläche beschränkt werden. Durch die Verwendung einer Licht begrenzenden (light confining) Struktur, wie einer Kavität, kann die Anregung gezielt nur einem bestimmten Defekt zugeführt werden. Dadurch ein oder mehrere dieser Maßnahmen kann die örtliche Auflösung noch weiter gesteigert werden, indem von vornherein nur bestimmte Defekte angeregt werden. Außerdem kann gezielt eine Auswahl bestimmter Defekte erfolgen. Insgesamt können mit ein oder mehreren dieser Maßnahmen die Anregung so geformt und dadurch die Photoanregung des Defekts und die anschließende Photoemission der Elektronen aus Bereichen viel kleiner als die Beugungsgrenze (1 nm - 1300 nm) ermöglicht werden, wodurch die noch höhere Lokalisierungsauflösungen, Empfindlichkeiten und Dynamikumfänge erreicht werden.

In einer vorteilhaften Weiterbildung ist vorgesehen, dass der Spin-Zustand des Elektrons durch ein oder mehrere zusätzliche Anregungen ermittelt wird, wobei die zusätzliche Anregung durch elektromagnetische Wellen, bevorzugt Licht (Infrarot (300 GHz bis 384 THz), sichtbares Licht (384 THz bis 789 THz), Ultraviolettes Licht (789 THz bis 30 PHz)), Rundfunkwellen (Ultrakurzwellen (30 MHz bis 300 MHz), Kurzwellen (3 MHz bis 30 MHz), Mittelwellen (300 kHz bis 3 MHz) und Langwellen (30 kHz bis 300 kHz)), Terahertzstrahlung (0,1 THz bis 10 THz), Niederfrequenz (1 kHz bis 30 kHz) oder Mikrowellen (1 GHz bis 300 GHz), durch elektromagnetische Felder, durch thermische Prozesse oder durch thermionische Prozesse erfolgt. Dadurch können beispielsweise Wechselwirkungen zwischen verschiedenen Defekten untersucht bzw. der Zustand eines Defekts ausgelesen werden, wodurch insbesondere Qubit-Anwendungen ermöglicht werden. Durch Anwendung der Spinzustandsbestimmung und einer spinzustandsselektiven Anregung von Elektronen aus dem Material und anschließender Abbildung werden die Defekte räumlich und gleichzeitig durch ihre Spinzustände aufgelöst.

In einer vorteilhaften Weiterbildung ist vorgesehen, dass das Material elektrisch geerdet wird. Dadurch wird eine Beeinflussung der Untersuchung durch eine Aufladung des Materials verhindert.

In einer vorteilhaften Weiterbildung ist vorgesehen, dass über der Oberfläche des Materials eine Biasspannung angelegt wird, wobei die Biasspannung bevorzugt positiv ist. Dadurch wird die Entnahme der emittierten Elektronen und deren Überführung in die Elektronenabbildung erleichtert und verbessert. Wenn die Biasspannung an einer Elektrode, vorzugsweise einem Gitter angelegt wird, können eine Vielzahl von Elektronen zugleich beschleunigt werden, sodass mehrere Elektronen parallel untersucht, also eine großflächige Abbildung ermöglicht wird. Wenn alternativ die Biasspannung an einer Spitze angelegt wird, kann die örtliche Auflösung noch weiter verbessert werden. Für eine parallele Betrachtung von mehreren Elektronen wären dann allerdings mehrere Spitzen erforderlich. Mit einer oder mehreren Spitzen könnte dann ein serielles Abrastern der Oberfläche des Festkörpers erfolgen.

In einer vorteilhaften Weiterbildung ist vorgesehen, dass das Material dotiert ist, bevorzugt mit einem Donator dotiert ist. Beispielsweise kann es sich um Bor handeln. Dadurch werden einem Defekt besonders sicher Elektronen bereitgestellt, so dass die Defekte leichter untersucht werden können. Das erfindungsgemäße Verfahren funktioniert allerdings grundsätzlich auch ohne Dotierung.

In einer vorteilhaften Weiterbildung ist vorgesehen, dass der Defekt durch zumindest eines der Methoden aus der Gruppe umfassend: Implantation nach Herstellung des Materials, Dotierung während der Herstellung des Materials und durch Elektronenbestrahlung während oder nach Herstellung des Materials erzeugt wurde. Dadurch lassen sich Defekte besonders einfach und dennoch, insbesondere im Hinblick auf ihre Lokalisation, determiniert erzeugen.

In einer vorteilhaften Weiterbildung ist vorgesehen, dass die Oberfläche des Materials mit dünnen leitenden Schicht versehen wurde, wobei die Schicht bevorzugt eine metallische Schicht oder eine Metall koordinierte Molekularschicht ist, wobei die Schicht insbesondere aus einer oder zwei bis fünf Monolagen besteht. Dadurch wird die Emission der angeregten Elektronen erleichtert. Die Schicht kann vorzugsweise als "Coating", also durch einen Beschichtungsprozess aufgebracht sein. Das erfindungsgemäße Verfahren funktioniert grundsätzlich allerdings auch ohne eine solche Schicht.

In einer vorteilhaften Weiterbildung ist vorgesehen, dass das Material von einer magnetischen Abschirmung umgeben ist. Dabei kann es sich beispielsweise um ein weichmagnetisches Material handeln. Dadurch wird die Präzision erhöht, weil externe magnetische Felder, wie das Erdmagnetfeld, die Elektronenemission und auch den Pfad des emittierten Elektrons nicht beeinflussen können.

In einer vorteilhaften Weiterbildung ist vorgesehen, dass das Material von einem Faraday'schen Käfig umgeben ist. Auch dadurch wird die Präzision erhöht, weil dann externe elektromagnetische Felder, wie solche von Leitungen elektrischer Energie, die Elektronenemission und auch den Pfad des emittierten Elektrons nicht beeinflussen können.

In einer vorteilhaften Weiterbildung ist vorgesehen, dass das Material in Vakuum mit einem Druck von höchstens $10^3$ mbar angeordnet ist, wodurch die Defekte besonders gut räumlich exakt lokalisierbar sind, weil die aus der Oberfläche des Materials austretenden Elektronen nicht von Partikeln gestört werden.

In einer vorteilhaften Weiterbildung ist vorgesehen, dass das Material gekühlt wird, wobei die Kühlung bevorzugt im Temperaturbereich von 0,1 °K bis 210 °K erfolgt. Dadurch haben die Defekte ein definiertes Anregungsspektrum, das selektiv für den Spinzustand ist.

In einer vorteilhaften Weiterbildung ist vorgesehen, dass das Material als Festkörper, bevorzugt als Schicht oder Bulkmaterial vorliegt und insbesondere einen Stoff aus der Gruppe umfassend: Diamant, Silizium, Silizumcarbid, hexagonales Bornitrid und kristalline Materialien mit einer Bandlücke im Bereich 0,1 eV bis 14 eV aufweist. Für diese Festkörper liegen umfangreiche Informationen zu ihren Defekten vor. Die Schicht kann dabei vorzugsweise als atomar dünne Schicht im Subnanometerbereich vorliegen oder als kristalline zweidimensionale Schicht.

Unabhängiger Schutz wird beansprucht für die erfindungsgemäße Vorrichtung zur ortsaufgelösten Lokalisierung eines Defekts in einem Festkörper, nach Anspruch 14.

In einer vorteilhaften Weiterbildung ist vorgesehen, dass die Vorrichtung angepasst ist das erfindungsgemäße Verfahren durchzuführen.

Erfindungsgemäß ist vorgesehen, dass die Vorrichtung den Aufbau eines Transmissionselektronenmikroskops aufweist, wobei anstelle eines Elektronenfilaments des Transmissionselektronenmikroskops das Material angeordnet wird. Dann ist die Vorrichtung besonders einfach herstellbar und weist eine sehr hohe Ortsauflösung bei hoher Bildqualität und Bildrobustheit und automatischer Ausrichtung auf.

In einer vorteilhaften Weiterbildung ist vorgesehen, dass die Vorrichtung Bestandteil eines Quantencomputer oder eines Quantensensors ist. Dadurch können Quantencomputer und Quantensensoren mit höherer Präzision betrieben werden.

Selbständiger Schutz wird beansprucht für die erfindungsgemäße Verwendung des erfindungsgemäßen Verfahrens oder der erfindungsgemäßen Vorrichtung, die dadurch gekennzeichnet ist, dass damit Quantumcomputer-Anwendungen, Quanten basierte Informationsverarbeitungen oder Quantensensorik-Anwendungen durchgeführt werden. Diese Prozesse sind damit mit noch höherer Präzision durchführbar. Vor allem im Bereich der Quantensensorik kann dann eine sehr hohe Ortsauflösung erzielt werden.

In einer vorteilhaften Weiterbildung ist vorgesehen, dass als Mittel zur Elektronenabbildung die entsprechenden Teile eines Elektronenmikroskops verwendet werden. Die Gesamte Vorrichtung kann somit durch ein Elektronenmikroskop gebildet werden, dass anstelle oder anstatt der Elektronenquelle eine Elektronenanregung, bevorzugt eine Lichtanregung, insbesondere eine LASER-Anregung aufweist.

Die Merkmale und weitere Vorteile der vorliegenden Erfindung werden im Folgenden anhand der Beschreibung zweier bevorzugter Ausführungsbeispiele im Zusammenhang mit den Figuren deutlich werden. Dabei zeigt rein schematisch:

Fig. 1  das erfindungsgemäße Verfahren nach einer ersten bevorzugten Ausgestaltung und

Fig. 2  das erfindungsgemäße Verfahren nach einer zweiten bevorzugten Ausgestaltung.

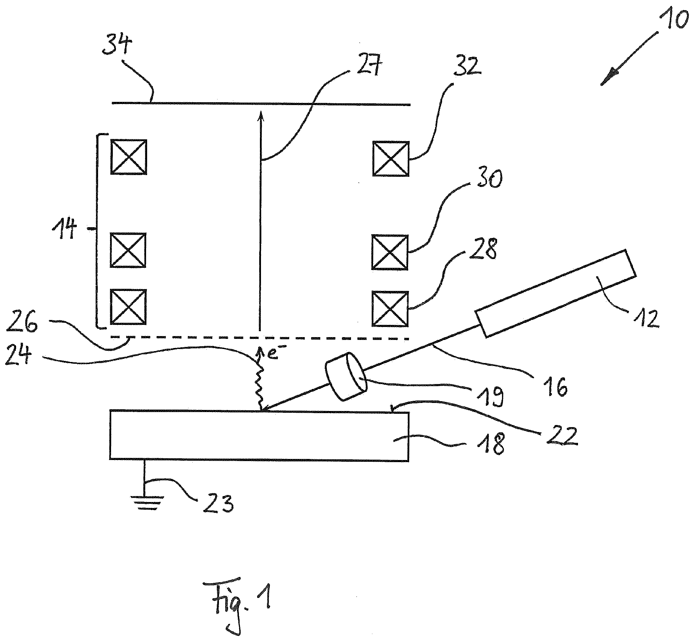

In Fig. 1 ist die erfindungsgemäße Vorrichtung gemäß einer ersten bevorzugten Ausgestaltung gezeigt.

Es ist zu erkennen, dass die erfindungsgemäße Vorrichtung 10 Mittel 12 zur Elektronenanregung und Mittel 14 zur Elektronenabbildung aufweist.

Die Mittel 12 zur Elektronenanregung weisen beispielsweise eine geeignet angesteuerte LASER-Quelle 12 auf, deren LASER-Strahl 16 auf einen in einer geeigneten Halterung (nicht gezeigt) angeordnete Probe 18 gerichtet werden kann, wobei zur Strahldefinierung ein oder mehrere optische Elemente 19, wie hochbrechende Objektive, Linsen und optische Strahlschärfer eingesetzt werden können. Die Mittel 12 zur Elektronenanregung können in ihrer Ausrichtung in Bezug auf die Probe 18 bewegbar ausgebildet sein, so dass der LASER-Strahl 16 auf einen bestimmten Punkt 20 der Oberfläche 22 der Probe 18 gerichtet werden kann. Die Probe ist dabei geerdet 23, so dass sie sich nicht aufladen kann.

In dem gezeigten Beispiel strahlt die optische Quelle 12 die Probe 18 von oben an. Dies ist vor allem für nicht durchstrahlbare Proben sinnvoll. Wenn die Probe 18 dagegen opak ist, kann die Einstrahlung 16 auch grundsätzlich von jeder Seite der Probe 18, also auch durch eine Seitenfläche der Probe 18 oder von unten durch die Probe 18 erfolgen.

Das mit einem Defekt der Probe 18 verbundene Elektron 24 wird durch die Anregung 16, wenn diese eine ausreichend hohe Energie aufweist, emittiert und anschließend durch eine über der Oberfläche 22 der Probe 18 angeordnetes metallisches Gitter 26, an dem eine positiver Biasspannung anliegt beschleunigt 27, so dass es von der Elektronenabbildung 14, genauer gesagt von einer Kondensor-Linse 28 übernommen werden kann. Die Biasspannung ist in Abhängigkeit von der Geometrie der Elektrode zu wählen und kann beispielsweise im Bereich von wenigen mV bis mehreren kV liegen.

Anschließend durchläuft das beschleunigte Elektron 27 noch ein Objektiv 30 und ein Projektiv 32 um schließlich auf eine CCD-Fläche 34 zu treffen. Das dort entstehende Bild (nicht gezeigt) stellt je nach gewählter optischer Parameter eine vollständige oder ausschnittsweise Abbildung der Ortskoordinaten der Oberfläche 22 dar und zeigt darauf die Orte, an denen die Elektronen 24 emittiert wurden, gibt als direkt die Lage der Defekte in Bezug auf die Oberfläche 22 der Probe 18 an.

Die Elemente der Elektronenoptik, also Kondensor-Linse 28, Objektiv 30 und Projektiv 32, sowie der Elektronendetektor 34 sind übliche Bestandteile eines Transmissionselektronenmikroskops und dem Fachmann bekannt, weshalb sie hier nicht näher erläutert werden. Es können also im Rahmen der vorliegenden Erfindung bevorzugt übliche TEM verwendet werden, wobei allerdings das Elektronenfilament entfernt und dort stattdessen die Probe 18 platziert wird. Die eigentliche Probenaufnahme des TEM bleibt stattdessen leer. Es können dabei alle anderen Elemente des TEM weiterverwendet werden, allerdings würde man beispielsweise den ersten von zwei üblichen Kondensern eines TEM nicht benötigen, kann diesen aber dennoch einsetzen. Dadurch können sehr hohe Auflösungen bei hoher Bildqualität und Bildrobustheit und automatischer Ausrichtung erreicht werden, weil solche TEM Aberrationskorrekturelemente, hohe Vergrößerung, Objektive mit hoher numerischer Apertur, Fokussierelemente und Beschleunigungssäulen zur Erhöhung der Energie der Elektronen aufweist.

Auch, dass zwischen der Probenoberfläche 22 und dem Elektronendetektor 34 Vakuum herrschen sollte, damit die Elektronen 24, 27 nicht unerwünscht beeinflusst werden, ist dem Fachmann geläufig.

Für die Verwirklichung der erfindungsgemäßen Vorrichtung kann somit ein kommerzielles Transmissionselektronenmikroskop verwendet werden, wobei auf deren Elektronenquelle und den Elektronenbeschleuniger verzichtet werden kann aber nicht muss. In jedem Fall müssen die Mittel 12 zur Elektronenanregung in der Probe 18 eingesetzt werden und zur Verbesserung der Vorrichtung auch die Mittel 26 zur Erzeugung einer Biasspannung.

Das erfindungsgemäße Verfahren unter Verwendung der erfindungsgemäßen Vorrichtung 10 soll im Folgenden anhand der Lokalisierung von Defekten in Form von Stickstofffehlstellenzentren in Diamant näher erläutert werden. Dasselbe Verfahren kann aber auch für beliebige andere Defekte und Materialien angewendet werden.

Stickstofffehlstellenzentren (engl. Nitrogen-Vacancy (NV)) in Diamant sind Defekte im Kohlenstoffgitter, die entstehen, wenn ein einzelnes Kohlenstoffatom durch ein Stickstoffatom substituiert wird und zugleich eine Lücke in angrenzenden Gitterstellen entsteht. Im negativen Ladungszustand besitzt das NV-Zentrum zwei ungepaarte Elektronen, die ein $S = 1$-System mit Triplett-Elektronenspin-Zuständen ($ms = 0, \pm 1$) bilden. Für ein NV-Zentrum führt die elektronische Wechselwirkung mit der Kristallsymmetrie dazu, dass die $ms = \pm 1$ entartet sind und um 2,87 GHz von der $ms = 0$ getrennt sind, was als Nullfeldaufspaltung (zero-field-splitting) bezeichnet wird. Die Spin-Unterebenen $ms = \pm 1$ teilen sich weiter in zwei Ebenen in einem Magnetfeld ungleich Null auf, das durch $\delta = 2\gamma B$ gegeben ist.

Unter Umgebungsbedingungen kann das dem NV-Zentrum zugeordnete Elektron durch grünes Licht mit einer Wellenlänge von 532 nm vom Grundzustand optisch in höhere elektronische Zustände angeregt werden (vgl. Gruber, A. (1997) 'Scanning Confocal Optical Microscopy and Magnetic Resonance on Single Defect Centers', Science, 276(5321), pp. 2012-2014. doi: 10.1126/science.276.5321.2012). Das angeregte Elektron fällt durch Lumineszenzemission oder durch nicht strahlende Prozesse in den Grundzustand zurück. Die Anregungs- und Abregungswege werden durch den Spinzustand der Elektronen bestimmt (vgl. Goldman, M. L., Sipahigil, A., et al. (2015) 'Phonon-Induced Population Dynamics and Intersystem Crossing in Nitrogen-Vacancy Centers', Physical Review Letters, 114(14), p. 145502. doi: 10.1103/PhysRevLett.114.145502 und Goldman, M. L., Doherty, M. W., et al. (2015) 'State-selective intersystem crossing in nitrogen-vacancy centers', Physical Review B, 91(16), p. 165201. doi: 10.1103/PhysRevB.91.165201). Beispielsweise sind optische Übergänge spinerhaltend, daher wird das Elektron im $ms = 0$ (oder $ms = \pm 1$) Grundzustand angeregt in den $ms = 0$ (oder $ms = \pm 1$) Zustand in der angeregten Manigfaltigkeit. Die systemübergreifenden Kreuzungsraten der angeregten Manigfaltigkeit sind ebenfalls spinselektiv. Dies führt zu einer Besonderheit bei Stickstofffehlstellendefekten. Der Spin-Zustand kann auch bei Raumtemperatur mit sehr hoher Effizienz allein durch Verwendung von Licht optisch initialisiert werden. Nach einigen Mikrosekunden grüner Beleuchtung konnte ein einzelnes NV-Zentrum initialisiert werden, um $ms = 0$

Sub-Level zu drehen (vgl. Harrison, J., Sellars, M. J. and Manson, N. B. (2006) 'Measurement of the optically induced spin polarisation of N-V centres in diamond', Diamond and Related Materials, 15(4-8), pp. 586-588. doi: 10.1016/j.diamond.2005.12.027 und Robledo, L. et al. (2011) 'Spin dynamics in the optical cycle of single nitrogen-vacancy centres in diamond', New Journal of Physics, 13(2), p. 025013. doi: 10.1088/1367-2630/13/2/025013).

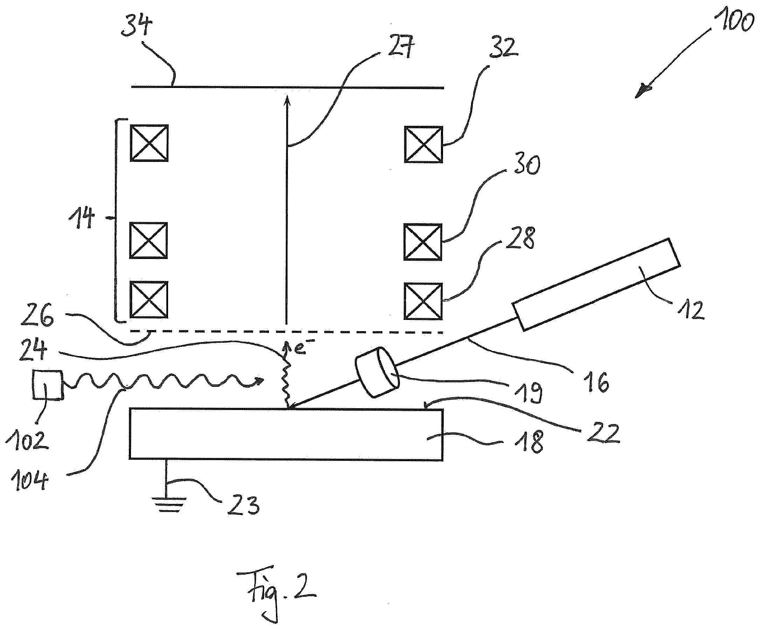

Da der Spinzustand im Zustand $ms = 0$ initialisiert werden kann, kann man ein Mikrowellenfeld anlegen, um einen Spinübergang in den Zustand $ms = + 1$ oder $ms = 1$ zu induzieren, so wie es mit der in Fig. 2 gezeigten erfindungsgemäßen Vorrichtung 100 möglich ist, die hierzu zusätzlich noch eine Mikrowellenquelle 102 für einzustrahhlende Mikrowellen 104 aufweist, während alle übrigen Bestandteile denen der Vorrichtung 10 aus Fig. 1 entsprechen.

Dieser Spin-Flip führt zu einem neuen Grundniveau des Elektrons, weshalb es einen anderen optischen Anregungs-Abregungszyklus durchläuft. Dies führt zu einer Intensitätsabnahme der Lumineszenzemission. Dies wird als optisch erfasste Magnetresonanz bezeichnet. Da es sich dabei um eine Fernfeldtechnik handelt, leidet dies unter der begrenzten optischen Auflösung, die es praktisch verbietet, zwei solche NV-Defekte abzubilden oder aufzulösen, die innerhalb der Beugungsgrenze (ungefähr 200-250 nm) getrennt sind.

Diese Diamant-NV-Zentren sind vielversprechende Festkörper-Qubits für die Quanteninformationsverarbeitung und das Quantencomputing (vgl. DiVincenzo, D. (2010) 'Better than excellent', Nature Materials, 9(6), pp. 468-469. doi: 10.1038/nmat2774). Das mit dem NV-Zentrum assoziierte Elektron hat auch bei Raumtemperatur sehr gute Spin-Kohärenz-Eigenschaften (vgl. Balasubramanian, G. et al. (2009) 'Ultralong spin coherence time in isotopically engineered diamond', Nature Materials, 8(5), pp. 383-387. doi: 10.1038/nmat2420 und Herbschleb, E. D. et al. (2019) 'Ultra-long coherence times amongst room-temperature solid-state spins', Nature Communications, 10(1), p. 3766. doi: 10.1038/s41467-019-11776-8). Dies ist auch eine gute Voraussetzung für einen möglichen Quantenprozessor / Computer. Diese Qubits könnten beispielsweise durch Implantation von anderen Ionen als Kohlenstoff in reine Diamantsubstraten hergestellt werden (vgl. Jakobi, I. et al. (2016) 'Efficient creation of dipolar coupled nitrogen-vacancy spin qubits in diamond', Journal of Physics: Conference Series, 752, p. 012001. doi: 10.1088/1742-6596/752/1/012001; Scarabelli, D. et al. (2016) 'Nanoscale Engineering of Closely-Spaced Electronic Spins in Diamond', Nano Letters, 16(8), pp. 4982-4990. doi: 10.1021/acs.nanolett.6b01692; Haruyama, M. et al. (2019) 'Triple nitrogen-vacancy centre fabrication by C5N4Hn ion implantation', Nature Communications, 10(1), p. 2664. doi: 10.1038/s41467-019-10529-x; Ishiwata, H. et al. (2017) 'Perfectly aligned shallow ensemble nitrogen-vacancy centers in (111) diamond', Applied Physics Letters, 111(4), p. 043103. doi: 10.1063/1.4993160 und Ozawa, H. et al. (2017) 'Formation of perfectly aligned nitrogen-vacancy-center ensembles in chemical-vapor-deposition-grown diamond (111)', Applied Physics Express, 10(4), p. 045501. doi: 10.7567/APEX.10.045501).

Solche NV-Zentren sind deshalb für Quantencomputer von Vorteil, weil sie in unmittelbarer Nähe zueinander erzeugt werden können. Ein einzelnes NV-Zentrum ist atomar groß (praktisch sind die Elektronen auf ein paar Gitterkonstanten beschränkt, die nur ungefähr 200 Pikometer groß sind). Dieses einzelne Quantenspinsystem interagiert mit anderen Quantensystemen auf eine definierte Weise, die durch die Gesetze der Quantenphysik vorgegeben ist. Im Kontext der Quanteninformationswissenschaften kann ein Einzelelektronenquantensystem als Qubit bezeichnet werden. Diese Qubits können dazu gebracht werden, mit einem anderen Qubit oder einem Netzwerk von Qubits zu interagieren. Im Fall von Elektronenspins können sie durch magnetische Dipol-Dipol-Kopplung zur Wechselwirkung gebracht werden. Diese in Bezug auf die Kopplungsstärke angegebene Wechselwirkungsstärke nimmt allerdings mit der dritten Potenz des Abstands ab (vgl. Neumann, P. et al. (2010) 'Quantum register based on coupled electron spins in a room-temperature solid', Nature Physics, 6(4), pp. 249-253. doi: 10.1038/nphys1536). Daher ist es wichtig, die Qubits (NV-Zentren) im Bereich von 5 bis 20 Nanometern nahe beieinander zu anzuordnen (vgl. Jakobi, I. et al. (2016) 'Efficient creation of dipolar coupled nitrogen-vacancy spin qubits in diamond', Journal of Physics: Conference Series, 752, p. 012001. doi: 10.1088/1742-6596/752/1/012001 und Neumann, P. et al. (2010) 'Quantum register based on coupled electron spins in a room-temperature solid', Nature Physics, 6(4), pp. 249-253. doi: 10.1038/nphys1536). Wie zuvor skizziert wurde, ist in diesen engen Verhältnissen ein Netzwerk von zwei oder mehr NV-Zentren einzeln mit optischen Mitteln nicht auflösbar. Daher kann ihr Spinzustand nicht ausgelesen werden, was für die Verarbeitung von Quanteninformationen nützlich wäre.

Mit der Methode der vorliegenden Erfindung können einzelne Qubits auch bei einer Auflösung im Subnanometerbereich sowie einer großen Anzahl von Spins und deren Netzwerken mit sehr hoher Auflösung lokalisiert werden. Diese neue Methode würde Detektoren für einen großen Quantenprozessor, zum Auslesen für die Quantenerfassung und für quantenfähige Messnetze ermöglichen, für die daher selbständiger Schutz beansprucht wird.

Ein einzelner NV-Defekt hat eine elektronische Niveaustruktur innerhalb der Bandlücke des Diamanten. Dabei bilden der Grundzustand (2A) und der angeregte Zustand (3E) ein elektronisches Triplett, das bei grünem Licht (532 nm) bei Raumtemperatur angeregt werden kann. Das Elektron geht durch Absorption eines Photons in den angeregten Zustand 3E über. Wenn nun die Laserleistung erhöht wird (dazu kann man eine gepulste Laserquelle verwenden) oder die Laserenergie durch Wahl einer kürzeren Wellenlänge von beispielsweise 405 nm oder kürzer erhöht wird, wird ein Zwei-Photonen-Prozess induziert, durch den das Elektron in das Leitungsband angeregt wird (vgl. Bourgeois, E. et al. (2015) 'Photoelectric detection of electron spin resonance of nitrogen-vacancy centres in diamond', Nature Communications, 6(1), p. 8577. doi: 10.1038/ncomms9577 und Siyushev, P. et al. (2019) 'Photoelectrical imaging and coherent spin-state readout of single nitrogen-vacancy centers in diamond', Science, 363(6428), pp. 728-731. doi: 10.1126/science.aav2789). Die Anregungswellenlänge ist dabei so gewählt, dass nur die Defekte photoionisiert werden. Zudem ist das Material ansonsten defektfrei, so dass keine anderen Photoelektronen durch optische Anregung emittiert werden.

Dieses photoionisierte Elektron 24 wird dann durch eine positive Vorspannung des Gitters 26, die außerhalb des Diamanten angelegt ist, in das Vakuum emittiert. Dieses photoemittierte Elektron 24 wird dabei vom Gitter 26 gesammelt und auf bestimmte Energien von 0,01 eV bis zu 10 eV beschleunigt 27, die für die gewünschte verwendete Elektronenoptik und die erforderliche Auflösung ausreichen. Das beschleunigte Elektron 27 wird dann wie in einem TEM in eine Objektivlinse 30 gerichtet. Dabei passiert das Elektron 24 eine Reihe von Elektronenoptiken 28, 30, 32, die durch magnetische oder elektromagnetische Linsen 30, 32 und Kondensor-Linse 28 hergestellt werden. Die Elektronenemission vom NV-Zentrum wird dabei durch eine Reihe von Linsen 30 vergrößert, um ein geeignetes Bild in der Bildebene des Elektronenmikroskops zu erzeugen. Dadurch kann eine Ortsauflösung für die Defekte in dem Material 18 von mindestens 25 nm, bevorzugt von mindestens 20 nm und insbesondere im Bereich 0,1 nm bis 20 nm erzielt werden.

Die elektronenoptischen Komponenten 28, 30, 32 könnten eine Reihe von Aberrationskorrekturelementen (nicht gezeigt) aufweisen, um ein qualitativ hochwertiges Bild mit minimaler Verzerrung am Detektor 34 zu erzeugen.

Der in der Bildebene platzierte Array-Detektor (Kamera) 34 sollte in der Lage sein, die Anzahl der an jedem Pixel ankommenden Elektronen 27 aufzuzeichnen. Es gibt verschiedene Möglichkeiten für Detektorkameras 34, die ähnlich wie bei einer TEM-Kamera verwendet werden. Es könnte sich um einen einfachen Phosphorschirm, CCD-Kameras 27 mit Mikrokanalplattenverstärkung und Kameras mit direktem Elektronendetektor handeln.

Die spinselektive Anregung, die die photoemittierten Elektronen 24 produziert, wird vom Array-Detektor erfasst und abgebildet. Das Elektron 27, das die Bildebene erreicht, könnte durch die Mikrokanalplatten (MCPs) oder Verstärker oder sogar direkte Elektronendetektoren mit hoher Verstärkung verstärkt werden. Da die Elektronenverstärkung am Detektor 34 stattfindet, ist der Prozess nicht durch Photonenschussrauschen begrenzt, was die Begrenzung der optisch erfassten Magnetresonanz oder Bildgebung nach dem Stand der Technik darstellt.

Die Elektronenbilddetektoren bieten ein außergewöhnliches Signal-Rausch-Verhältnis von größer 10 bis 30, selbst für ein einzelnes Elektron 27. Diese überlegene Erkennungsempfindlichkeit bietet eine hervorragende Möglichkeit zur Spinerkennung auch bei Einzelaufnahmen. Dabei werden ein hoher Kontrast der Spinzustände und eine bessere Wiedergabetreue der Spinzustände ermöglicht. Dies sind Funktionen, die für Quanteninformations- und Verarbeitungsanwendungen sehr wünschenswert sind.

Aus der vorstehenden Darstellung ist deutlich geworden, dass mit der vorliegenden Erfindung eine Methode bereitgestellt wird, mit der Defekte in Materialen, bevorzugt in Festkörpern, mit wesentlich höherer örtlicher Auflösung als zuvor lokalisiert werden können. Dabei ist eine optische Abbildung solcher Defekte mit hoher örtlicher Auflösung schnell und kostengünstig möglich. Vor allem ist mit der vorliegenden Erfindung eine kontaktlose spinselektive Anregung und Erfassung bzw. Abbildung von Defekten im Festkörper mit hoher Empfindlichkeit, hohem dynamischem Bereich, sowie großem Sichtfeld und ausgezeichneter Auflösung möglich, die die aktuellen Fähigkeiten optischer Detektionsverfahren weit übertrifft. Die erfindungsgemäße Vorrichtung und das erfindungsgemäße Verfahren sind auch äußerst nützlich für die Quantenberechnung unter Verwendung von Defektspins in Festkörpern, für die quantenfähige Erfassung und für quantenfähige Messnetze.

**Bezugszeichenliste**

| 10 | erfindungsgemäße Vorrichtung gemäß einer ersten bevorzugten Ausgestaltung |
| 12 | Mittel zur Elektronenanregung, LASER-Quelle |
| 14 | Mittel zur Elektronenabbildung |
| 16 | LASER-Strahl |
| 18 | Probe |
| 19 | optisches Element |
| 20 | bestimmter Punkt der Oberfläche 22 der Probe 18 |
| 22 | Oberfläche der Probe 18 |
| 23 | Erdung der Probe 18 |
| 24 | das mit einem Defekt der Probe 18 verbundene Elektron |
| 26 | metallisches Gitter |
| 27 | emittiertes und beschleunigtes Elektron |
| 28 | Kondensor-Linse |
| 30 | Objektiv |
| 32 | Projektiv |
| 34 | Elektronendetektor, CCD-Fläche |
| 100 | erfindungsgemäße Vorrichtung gemäß einer zweiten bevorzugten Ausgestaltung |
| 102 | Mikrowellen-Quelle |
| 104 | Mikrowellenstrahlung |

**Patentansprüche**

1. Verfahren zur ortsaufgelösten Lokalisierung eines Defekts in einem Material (18), das eine Bandlücke aufweist, wobei der Defekt ein oder mehrere Elektronen (24) aufweist, die zumindest ein Energieniveau aufweisen, das in der Bandlücke liegt, wobei das Elektron (24) so angeregt wird, dass es aus dem Material emittiert wird und anschließend eine Elektronenabbildung (14) durchgeführt wird, wobei die Elektronenabbildung mit Hilfe einer Elektronenoptik (26, 28, 30, 32) und einem Elektronendetektor (34) durchgeführt wird, **dadurch gekennzeichnet, dass** der Aufbau eines Transmissionselektronenmikroskops verwendet wird, wobei anstelle eines Elektronenfilaments des Transmissionselektronenmikroskops das Material angeordnet wird, wobei der Defekt mit einer Ortsauflösung von mindestens 25 nm abgebildet wird.

2. Verfahren nach Anspruch 1, **dadurch gekennzeichnet, dass** das Material (18) ein Festkörper ist, wobei der Festkörper bevorzugt als Schicht oder Bulkmaterial vorliegt und insbesondere einen Stoff aus der Gruppe umfassend: Diamant, Silizium, Siliziumcarbid, hexagonales Bornitrid und kristalline Materialien mit einer Bandlücke im Bereich 0,1 eV bis 14 eV aufweist, wobei die Schicht vorzugsweise als atomar dünne Schicht im Subnanometerbereich oder als kristalline zweidimensionale Schicht vorliegt und/oder
dass der Defekt mit einer Ortsauflösung von mindestens 20 nm und insbesondere im Bereich 0,1 nm bis 20 nm abgebildet wird.

3. Verfahren nach Anspruch 1 oder 2, **dadurch gekennzeichnet, dass** als Elektronendetektor eine Mikrokanalplatte, ein direkter Elektronendetektor, ein Elektronen-Multiplikator-CCD, ein sCMOS oder ein Phosphorbildschirm verwendet wird und/oder dass als Elektronenoptik (26, 28, 30, 32) ein magnetisches Element oder elektromagnetisches Element verwendet wird.

4. Verfahren nach einem der vorherigen Ansprüche, **dadurch gekennzeichnet, dass** die Anregung des Elektrons (24) durch ein oder mehrere elektromagnetische Wellen, bevorzugt Licht (16) erfolgt.

5. Verfahren nach Anspruch 4, **dadurch gekennzeichnet, dass** die Anregung auf einen Bereich, bevorzugt einen Oberflächenbereich (20) des Materials (18) fokussiert wird, wobei insbesondere Licht (16) verwendet wird, das durch ein oder mehrere optische Elemente, vorzugsweise ein Objektiv mit hoher numerischer Apertur fokussiert wird, und/oder

dass als die Anregung mittels einer LASER-Lichtquelle erfolgt und/oder

dass die Anregung in Evaneszenz-Wellen Geometrie erfolgt und/oder

dass der Defekt in einer Licht begrenzenden Nanostruktur, Kavität oder optischen Resonator angeordnet wird.

6. Verfahren nach einem der vorherigen Ansprüche, **dadurch gekennzeichnet, dass** der Spin-Zustand des Elektrons (24) durch ein oder mehrere zusätzliche Anregungen ermittelt wird, wobei die zusätzliche Anregung durch elektromagnetische Wellen, bevorzugt Licht, Rundfunkwellen oder Mikrowellen, durch elektromagnetische Felder, durch thermische Prozesse oder durch thermionische Prozesse erfolgt.

7. Verfahren nach einem der vorherigen Ansprüche, **dadurch gekennzeichnet, dass** das Material (18) elektrisch geerdet (23) wird.

8. Verfahren nach einem der vorherigen Ansprüche, **dadurch gekennzeichnet, dass** über der Oberfläche (22) des Materials (18) eine Biasspannung (26) angelegt wird, wobei die Biasspannung bevorzugt positiv ist, wobei die Biasspannung insbesondere an einer Elektrode, vorzugsweise einem Gitter (26) oder einer Spitze angelegt wird.

9. Verfahren nach einem der vorherigen Ansprüche, **dadurch gekennzeichnet, dass** das Material (18) dotiert ist, bevorzugt mit einem Donator, bevorzugt Bor, dotiert ist.

10. Verfahren nach einem der vorherigen Ansprüche, **dadurch gekennzeichnet, dass** der Defekt durch zumindest eines der Methoden aus der Gruppe umfassend: Implantation nach Herstellung des Materials, Dotierung während der Herstellung des Materials und durch Elektronenbestrahlung während oder nach Herstellung des Materials erzeugt wurde.

11. Verfahren nach einem der vorherigen Ansprüche, **dadurch gekennzeichnet, dass** die Oberfläche des Materials mit einer dünnen leitenden Schicht versehen wurde, wobei die Schicht bevorzugt eine metallische Schicht oder eine Metall koordinierte Molekularschicht ist, wobei die Schicht insbesondere aus einer oder zwei bis fünf Monolagen besteht.

12. Verfahren nach einem der vorherigen Ansprüche, **dadurch gekennzeichnet,**

dass das Material von einer magnetischen Schirmung umgeben ist und/oder

dass das Material von einem Faraday'schen Käfig umgeben ist und/oder

dass das Material in Vakuum mit einem Druck von höchstens $10^3$ mbar angeordnet ist.

13. Verfahren nach einem der vorherigen Ansprüche, **dadurch gekennzeichnet, dass** das Material gekühlt wird, wobei die Kühlung bevorzugt im Temperaturbereich von 0.1 °K bis 210 °K erfolgt.

14. Vorrichtung (10) zur ortsaufgelösten Lokalisierung eines Defekts in einem Material (18), wobei das Material (18) eine Bandlücke aufweist, wobei der Defekt ein oder mehrere Elektronen (24) aufweist, die zumindest ein Energieniveau aufweisen, das in der Bandlücke liegt, wobei die Vorrichtung (10) Mittel (12) zur Anregung des Elektrons (24) aufweist, die angepasst sind, das Elektron (24) so anzuregen, dass es aus dem Material (18) emittiert wird, und Mittel (14) zur Elektronenabbildung mit einer Elektronenoptik (26, 28, 30, 32) und einem Elektronendetektor (34) aufweist, wobei die Vorrichtung den Aufbau eines Transmissionselektronenmikroskops umfasst, **dadurch gekennzeichnet, dass** die Vorrichtung (10) angepasst ist, dass anstelle eines Elektronenfilaments des Transmissionselektronenmikroskops das Material angeordnet ist, wobei die Vorrichtung (10) so angepasst ist, dass der Defekt mit einer Ortsauflösung von mindestens 25 nm abgebildet wird.

15. Vorrichtung nach Anspruch 14, **dadurch gekennzeichnet,**

dass die Vorrichtung (10) angepasst ist das Verfahren nach einem der Ansprüche 2 bis 13 durchzuführen und/oder

dass die Vorrichtung Bestandteil eines Quantencomputer oder eines Quantensensors ist.

16. Verwendung des Verfahrens nach einem der Ansprüche 1 bis 13 oder der Vorrichtung nach einem der Ansprüche 14 oder 15, **dadurch gekennzeichnet, dass** damit Quantumcomputer-Anwendungen, Quanten basierte Informationsverarbeitungen oder Quantensensorik-Anwendungen durchgeführt werden.

**Claims**

1. Method for spatially resolved localisation of a defect in a material (18) that has a band gap, wherein the defect has one or more electrons (24) that have at least one energy level that lies in the band gap, wherein the electron (24) is excited such that it is emitted from the material and subsequently electron imaging (14) is carried out, wherein the electron imaging is carried out with the aid of electron optics (26, 28, 30, 32) and an electron detector (34), **char-**

acterised in that the structure of a transmission electron microscope is used, wherein the material is arranged in place of an electron filament of the transmission electron microscope, wherein the defect is imaged with a spatial resolution of at least 25 nm.

2. Method according to claim 1, **characterised in that** the material (18) is a solid body, wherein the solid body is preferably in the form of a layer or bulk material and comprises, in particular, a substance from the group comprising diamond, silicon, silicon carbide, hexagonal boron nitride and crystalline materials with a band gap in a range of 0.1 eV to 14 eV, wherein the layer is preferably an atomically thin layer in a sub-nanometre range or a crystalline two-dimensional layer and/or in that the defect is imaged with a spatial resolution of at least 20 nm and in particular in the range of 0.1 nm to 20 nm.

3. Method according to claim 1 or 2, **characterised in that** a microchannel plate, a direct electron detector, an electron multiplier CCD, an sCMOS, or a phosphor screen is used as the electron detector and/or **in that** a magnetic element or an electromagnetic element is used as the electron optics (26, 28, 30, 32).

4. Method according to any one of the preceding claims, **characterised in that** the excitation of the electron (24) is effected by one or more electromagnetic waves, preferably light (16).

5. Method according to claim 4, **characterised in that** the excitation is focussed on a region, preferably a surface region (20) of the material (18), wherein in particular light (16) is used that is focussed by one or more optical elements, preferably an objective with a high numerical aperture, and/or

in that the excitation is effected by a LASER light source and/or
in that the excitation is effected in evanescent wave geometry and/or
in that the defect is arranged in a light-confining nanostructure, cavity or optical resonator.

6. Method according to any one of the preceding claims, **characterised in that** the spin state of the electron (24) is determined by one or more additional excitations with electromagnetic waves, preferably light, radio waves or microwaves, by electromagnetic fields, by thermal processes, or by thermionic processes.

7. Method according to any one of the preceding claims, **characterised in that** the material (18) is electrically earthed (23).

8. Method according to any one of the preceding claims, **characterised in that** a bias voltage (26) is applied over the surface (22) of the material (18), wherein the bias voltage is preferably positive, wherein the bias voltage is applied in particular to an electrode, preferably a grid (26) or a tip.

9. Method according to any one of the preceding claims, **characterised in that** the material (18) is doped, preferably with a donor, preferably boron.

10. Method according to any one of the preceding claims, **characterised in that** the defect was created by at least one of the processes from the group comprising implantation after production of the material, doping during production of the material, or electron irradiation during or after production of the material.

11. Method according to any one of the preceding claims, **characterised in that** the surface of the material has been provided with a thin conductive layer, wherein the layer is preferably a metallic layer or a metal-coordinated molecular layer, wherein the layer consists in particular of one or two to five monolayers.

12. Method according to any one of the preceding claims, **characterised**

in that the material is surrounded by a magnetic shielding and/or
in that the material is surrounded by a Faraday cage and/or
in that the material is placed in a vacuum with a pressure of no more than 103 mbar.

13. Method according to any one of the preceding claims, **characterised in that** the material is cooled, wherein the cooling is preferably carried out in the temperature range of 0.1°K to 210°K.

14. Device (10) for spatially resolved localisation of a defect in a material (18), wherein the material (18) has a band gap, wherein the defect has one or more electrons (24) that have at least one energy level that lies in the band gap, wherein the device (10) has means (12) for exciting the electron (24) that are configured to excite the electron (24) such that it is emitted from the material (18), and has means (14) for electron imaging using electron optics (26, 28, 30, 32) and an electron detector (34), wherein the device comprises the structure of a transmission electron microscope, **characterised in that** the device (10) is configured such that the material is arranged in place of an electron filament of the transmission electron microscope, wherein the device (10) is configured such that the defect is imaged with a spatial resolution of at least 25 nm.

15. Device according to claim 14, **characterised**

     **in that** the device (10) is configured to carry out the method according to any one of claims 2 to 13 and/or
     **in that** the device is a component of a quantum computer or a quantum sensor.

16. Use of the method according to any one of claims 1 to 13 or the device according to one of claims 14 or 15, **characterised in that** quantum computing applications, quantum-based information processing or quantum sensor applications are carried out therewith.


**Revendications**

1. Procédé de localisation spatiale résolue d'un défaut dans un matériau (18) présentant une bande interdite, le défaut présentant un ou plusieurs électrons (24) qui présentent au moins un niveau d'énergie situé dans la bande interdite, l'électron (24) étant excité de manière à être émis hors du matériau, puis une imagerie électronique (14) étant réalisée, l'imagerie électronique étant effectuée à l'aide d'une optique électronique (26, 28, 30, 32) et d'un détecteur d'électrons (34), **caractérisé en ce que** la structure d'un microscope électronique à transmission est utilisée, le matériau étant agencé à la place d'un filament électronique du microscope électronique à transmission, le défaut étant représenté avec une résolution spatiale d'au moins 25 nm.

2. Procédé selon la revendication 1, **caractérisé en ce que** le matériau (18) est un solide, le solide se présentant de préférence sous forme de couche ou de matériau en vrac et présentant notamment une substance du groupe comprenant :

     diamant, silicium, carbure de silicium, nitrure de bore hexagonal et matériaux cristallins avec une bande interdite dans la plage de 0,1 eV à 14 eV, la couche se présentant de préférence sous forme de couche atomique mince dans le plage subnanométrique ou sous forme de couche cristalline bidimensionnelle et/ou
     **en ce que** le défaut est représenté avec une résolution spatiale d'au moins 20 nm et notamment dans la plage de 0,1 nm à 20 nm.

3. Procédé selon la revendication 1 ou 2, **caractérisé en ce qu'**on utilise comme détecteur d'électrons une plaque à microcanaux, un détecteur d'électrons direct, un CCD à multiplicateur d'électrons, un sCMOS ou un écran au phosphore et/ou **en ce qu'**on utilise comme optique électronique (26, 28, 30, 32) un élément magnétique ou un élément électromagnétique.

4. Procédé selon l'une quelconque des revendications précédentes, **caractérisé en ce que** l'excitation de l'électron (24) s'effectue par une ou plusieurs ondes électromagnétiques, de préférence par de la lumière (16).

5. Procédé selon la revendication 4, **caractérisé en ce que** l'excitation est focalisée sur une zone, de préférence une zone superficielle (20) du matériau (18), de la lumière (16) étant notamment utilisée, qui est focalisée par un ou plusieurs éléments optiques, de préférence un objectif à grande ouverture numérique, et/ou en ce que l'excitation est réalisée au moyen d'une source de lumière LASER et/ou en ce que l'excitation est réalisée dans une géométrie à ondes évanescentes et/ou en ce que le défaut est agencé dans une nanostructure, une cavité ou un résonateur optique limitant la lumière.

6. Procédé selon l'une quelconque des revendications précédentes, **caractérisé en ce que** l'état de spin de l'électron (24) est déterminé par une ou plusieurs excitations supplémentaires, l'excitation supplémentaire étant réalisée par des ondes électromagnétiques, de préférence de la lumière, des ondes radio ou des micro-ondes, par des champs électromagnétiques, par des processus thermiques ou par des processus thermo-ioniques.

7. Procédé selon l'une quelconque des revendications précédentes, **caractérisé en ce que** le matériau (18) est mis à la terre électriquement (23).

8. Procédé selon l'une quelconque des revendications précédentes, **caractérisé en ce qu'**une tension de polarisation (26) est appliquée sur la surface (22) du matériau (18), la tension de polarisation étant de préférence positive, la tension de polarisation étant appliquée notamment à une électrode, de préférence une grille (26) ou une pointe.

9. Procédé selon l'une quelconque des revendications précédentes, **caractérisé en ce que** le matériau (18) est dopé, de préférence avec un donneur, de préférence du bore.

10. Procédé selon l'une quelconque des revendications précédentes, **caractérisé en ce que** le défaut a été généré par au moins l'une des méthodes du groupe comprenant : l'implantation après la fabrication du matériau, le dopage pendant la fabrication du matériau et par exposition à des électrons pendant ou après la fabrication du matériau.

**11.** Procédé selon l'une quelconque des revendications précédentes, **caractérisé en ce que** la surface du matériau a été pourvue d'une couche conductrice mince, la couche étant de préférence une couche métallique ou une couche moléculaire coordonnée avec un métal, la couche étant notamment constituée d'une ou de deux à cinq monocouches.

**12.** Procédé selon l'une quelconque des revendications précédentes, **caractérisé**

> **en ce que** le matériau est entouré d'un blindage magnétique et/ou
> **en ce que** le matériau est entouré d'une cage de Faraday et/ou
> **en ce que** le matériau est agencé sous vide à une pression d'au plus $10^3$ mbar.

**13.** Procédé selon l'une quelconque des revendications précédentes, **caractérisé en ce que** le matériau est refroidi, le refroidissement s'effectuant de préférence dans la plage de température de 0,1 °K à 210 °K.

**14.** Dispositif (10) pour la localisation spatiale résolue d'un défaut dans un matériau (18), le matériau (18) présentant une bande interdite, le défaut présentant un ou plusieurs électrons (24) qui présentent au moins un niveau d'énergie situé dans la bande interdite, le dispositif (10) comprenant des moyens (12) pour exciter l'électron (24), adaptés pour exciter l'électron (24) de manière à ce qu'il soit émis à partir du matériau (18), et des moyens (14) pour l'imagerie électronique avec une optique électronique (26, 28, 30, 32) et un détecteur d'électrons (34), le dispositif comprenant la structure d'un microscope électronique à transmission, **caractérisé en ce que** le dispositif (10) est adapté pour que le matériau soit agencé à la place d'un filament électronique du microscope électronique à transmission, le dispositif (10) étant adapté pour que le défaut soit représenté avec une résolution spatiale d'au moins 25 nm.

**15.** Dispositif selon la revendication 14, **caractérisé**

> **en ce que** le dispositif (10) est adapté pour mettre en œuvre le procédé selon l'une quelconque des revendications 2 à 13 et/ou
> **en ce que** le dispositif est un constituant d'un ordinateur quantique ou d'un capteur quantique.

**16.** Utilisation du procédé selon l'une quelconque des revendications 1 à 13 ou du dispositif selon l'une quelconque des revendications 14 ou 15, **caractérisée en ce qu'**elle permet de réaliser des applications d'ordinateurs quantiques, des traitements d'informations quantiques ou des applications de systèmes de détection quantiques.

Fig. 1

Fig. 2

14

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **BASSETT, L. C. et al.** Quantum defects by design. *Nanophotonics*, 2019, vol. 8 (11), 1867-1888
- **ZAITSEV, A. M.** Optical Properties of Diamond. Heidelberg: Springer Berlin Heidelberg, 2001
- **CASTELLETTO, S. et al.** A silicon carbide room-temperature single-photon source. *Nature Materials*, 2014, vol. 13 (2), 151-156
- **TRAN, T. T. et al.** Quantum emission from hexagonal boron nitride monolayers. *Nature Nanotechnology*, 2016, vol. 11 (1), 37-41
- **HELL, S. W.** ; **WICHMANN, J.** Breaking the diffraction resolution limit by stimulated emission: stimulated-emission-depletion fluorescence microscopy. *Optics Letters*, 1994, vol. 19 (11), 780
- **RITTWEGER, E. et al.** STED microscopy reveals crystal colour centres with nanometric resolution. *Nature Photonics*, 2009, vol. 3 (3), 144-147
- **PFENDER, M. et al.** Single-spin stochastic optical reconstruction microscopy. *Proceedings of the National Academy of Sciences*, 2014, vol. 111 (41), 14669-14674
- **ARAI, K. et al.** Fourier magnetic imaging with nanoscale resolution and compressed sensing speed-up using electronic spins in diamond. *Nature Nanotechnology*, 2015, vol. 10 (10), 859-864
- **ZHANG, H. et al.** Selective addressing of solid-state spins at the nanoscale via magnetic resonance frequency encoding. *npj Quantum Information*, 2017, vol. 3 (1), 31
- **KEKI FUKUMOTO et al.** Femtosecond time-resolved photoemission electron microscopy for spatiotemporal imaging of photogenerated carrier dynamics in semiconductors. *Review of scientific instruments*, vol. 85 (8), 083705
- **K. FUKUMOTO et al.** Imaging the defect distribution in 2D hexagonal boron nitride by tracing photogenerated electron dynamics.. *J. Phys. D: Appl. Phys.*, 2020, vol. 53, 405106
- **GRUBER, A.** Scanning Confocal Optical Microscopy and Magnetic Resonance on Single Defect Centers. *Science*, 1997, vol. 276 (5321), 2012-2014
- **GOLDMAN, M. L.** ; **SIPAHIGIL, A. et al.** Phonon-Induced Population Dynamics and Intersystem Crossing in Nitrogen-Vacancy Centers. *Physical Review Letters*, 2015, vol. 114 (14), 145502
- **GOLDMAN, M. L** ; **DOHERTY, M. W. et al.** State-selective intersystem crossing in nitrogen-vacancy centers. *Physical Review B*, 2015, vol. 91 (16), 165201
- **HARRISON, J** ; **SELLARS, M. J.** ; **MANSON, N. B.** Measurement of the optically induced spin polarisation of N-V centres in diamond. *Diamond and Related Materials*, 2006, vol. 15 (4-8), 586-588
- **ROBLEDO, L. et al.** Spin dynamics in the optical cycle of single nitrogen-vacancy centres in diamond. *New Journal of Physics*, 2011, vol. 13 (2), 025013
- **DIVINCENZO, D.** Better than excellent. *Nature Materials*, 2010, vol. 9 (6), 468-469
- **BALASUBRAMANIAN, G. et al.** Ultralong spin coherence time in isotopically engineered diamond. *Nature Materials*, 2009, vol. 8 (5), 383-387
- **HERBSCHLEB, E. D. et al.** Ultra-long coherence times amongst room-temperature solid-state spins. *Nature Communications*, 2019, vol. 10 (1), 3766
- **JAKOBI, I. et al.** Efficient creation of dipolar coupled nitrogen-vacancy spin qubits in diamond. *Journal of Physics: Conference Series*, 2016, vol. 752, 012001
- **SCARABELLI, D. et al.** Nanoscale Engineering of Closely-Spaced Electronic Spins in Diamond. *Nano Letters*, 2016, vol. 16 (8), 4982-4990
- **HARUYAMA, M. et al.** Triple nitrogen-vacancy centre fabrication by C5N4Hn ion implantation. *Nature Communications*, 2019, vol. 10 (1), 2664
- **ISHIWATA, H. et al.** Perfectly aligned shallow ensemble nitrogen-vacancy centers in (111) diamond. *Applied Physics Letters*, 2017, vol. 111 (4), 043103
- **OZAWA, H et al.** Formation of perfectly aligned nitrogen-vacancy-center ensembles in chemical-vapor-deposition-grown diamond (111). *Applied Physics Express*, 2017, vol. 10 (4), 045501
- **NEUMANN, P. et al.** Quantum register based on coupled electron spins in a room-temperature solid. *Nature Physics*, 2010, vol. 6 (4), 249-253
- **BOURGEOIS, E. et al.** Photoelectric detection of electron spin resonance of nitrogen-vacancy centres in diamond. *Nature Communications*, 2015, vol. 6 (1), 8577
- **SIYUSHEV, P. et al.** Photoelectrical imaging and coherent spin-state readout of single nitrogen-vacancy centers in diamond. *Science*, 2019, vol. 363 (6428), 728-731